# FASCICULE DE BREVET EUROPEEN

(11) **EP 1 566 124 B1**
(45) Date de publication et mention de la délivrance du brevet: **21.06.2006**
(21) Numéro de dépôt: 05356028.0
(22) Date de dépôt: 08.02.2005
(51) Int. Cl.: A47J 27/21

(54) **Couvercle de fermeture d'un récipient d'appareil électroménager de préparation culinaire de type blender**
Verschlussdeckel für ein Behältnis von einem Haushaltsgerät zur Nahrungszubereitung, insbesondere einem Mixer
Closure lid of a container of a household appliance for preparing food of the blender type

(30) Priorité: 20.02.2004 FR 0401712
(43) Date de publication de la demande: 24.08.2005
(73) Titulaire: SEB S.A., 69130 Ecully (FR)
(72) Inventeur: Ravard, Franck, 53100 Mayenne (FR); Grassin, Stéphane, 72130 Fresnay Sur Sarthe (FR)
(74) Mandataire: Kiehl, Hubert

(56) Documents cités:
- WO-A-01/32063
- FR-A- 2 696 087
- US-A- 5 275 307
- US-A- 5 294 014

## Description

La présente invention se rapporte à un couvercle de fermeture d'un récipient d'appareil électroménager apte à contenir du liquide et plus particulièrement à un couvercle comportant un corps muni d'un orifice de déversement et un dispositif d'obturation de cet orifice mobile entre plusieurs positions.

Il est connu, du document US 5 275 307, un récipient apte à contenir du liquide comportant un couvercle de fermeture muni d'un orifice latéral de déversement, l'orifice pouvant être obturé, ou partiellement obturé, par une partie mobile en rotation portée par le couvercle.

Un tel couvercle présente cependant l'inconvénient d'être mal adapté aux récipients pour appareils électroménager aptes à mixer des aliments, tels que les appareils blender. En effet, ces récipients contiennent souvent des mixtures contenant des parties fibreuses ou de la pulpe qui risquent de s'insérer entre la partie obturatrice mobile et le corps couvercle. Il s'ensuit une grande difficulté à nettoyer correctement un tel couvercle avec les risques sanitaires que cela comporte.

Aussi, un but de la présente invention est de remédier à ces inconvénients en proposant un couvercle de fermeture de récipient d'appareil électroménager, muni d'un orifice de déversement pouvant s'obturer au moyen d'une partie mobile, qui soit facile à nettoyer.

A cet effet, l'invention a pour objet un couvercle de fermeture d'un récipient d'appareil électroménager de préparation culinaire de type blender apte à contenir du liquide, le couvercle comportant un corps muni d'un orifice et un dispositif d'obturation de cet orifice, le dispositif d'obturation comprenant une partie mobile entre plusieurs positions, dont l'une de fermeture empêche tout écoulement du liquide par l'orifice et une autre d'ouverture autorise le versement du liquide par basculement du récipient, caractérisé en ce que la partie mobile peut être disposée dans une position de démontage dans laquelle la partie mobile se désolidarise du corps du couvercle.

Une telle caractéristique présente l'avantage de permettre un nettoyage facile et en profondeur des divers éléments constituant le couvercle.

Selon une autre caractéristique du couvercle selon l'invention, la partie mobile comporte également une position dans laquelle une paroi ajourée est disposée devant l'orifice pour filtrer le liquide.

Une telle caractéristique présente l'avantage de permettre le filtrage de la mixture contenu dans le récipient.

Selon une autre caractéristique du couvercle selon l'invention, la partie mobile est mobile en rotation et comporte une partie annulaire qui constitue une portion de la surface supérieure du couvercle, la partie annulaire supportant une languette de préhension.

Une telle caractéristique constitue un moyen simple d'intégration de la partie mobile dans le couvercle.

Selon encore une autre caractéristique du couvercle selon l'invention, le corps du couvercle comporte au moins un rail de guidage coopérant avec des ergots portés par la partie mobile du couvercle pour maintenir la partie mobile sur le corps du couvercle lorsque la partie mobile n'est pas en position de démontage, le rail de guidage s'interrompant sur une partie balayée par les ergots lorsque la partie mobile est en position de démontage afin d'autoriser le retrait de la partie mobile dans cette position.

Selon encore une autre caractéristique de l'invention, l'orifice est disposé latéralement sur le corps du couvercle et la partie mobile rotative comporte un volet s'insérant dans une fente réalisée dans la partie supérieure du corps du couvercle, le volet venant prendre place en regard de l'orifice pour fermer ou réduire la section de passage de l'orifice.

Selon encore une autre caractéristique de l'invention, le couvercle comporte un élément ressort coopérant avec une paroi crantée pour freiner la partie mobile dans des positions préétablies.

Selon encore une autre caractéristique de l'invention, la partie mobile comporte une ouverture centrale fermée par un bouchon.

Une telle caractéristique présente l'avantage de permettre l'insertion d'ingrédients dans le récipient sans enlever le couvercle.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue générale en perspective d'un appareil blender comportant un récipient muni d'un couvercle selon un mode particulier de réalisation de l'invention ;
- la figure 2 est une vue en perspective éclatée du couvercle de la figure 1 ;
- la figure 3 est une autre vue en perspective représentant le couvercle de la figure 1 avec sa partie mobile obturatrice démontée ;
- la figure 4 est une vue du couvercle de la figure 1 lorsque la partie mobile obturatrice du couvercle est amenée dans la position de filtration ;
- la figure 5 est une vue du couvercle de la figure 1 lorsque la partie mobile obturatrice du couvercle est amenée dans la position d'ouverture ;
- la figure 6 est une vue du couvercle de la figure 1 lorsque la partie mobile obturatrice du couvercle est amenée dans la position de démontage.

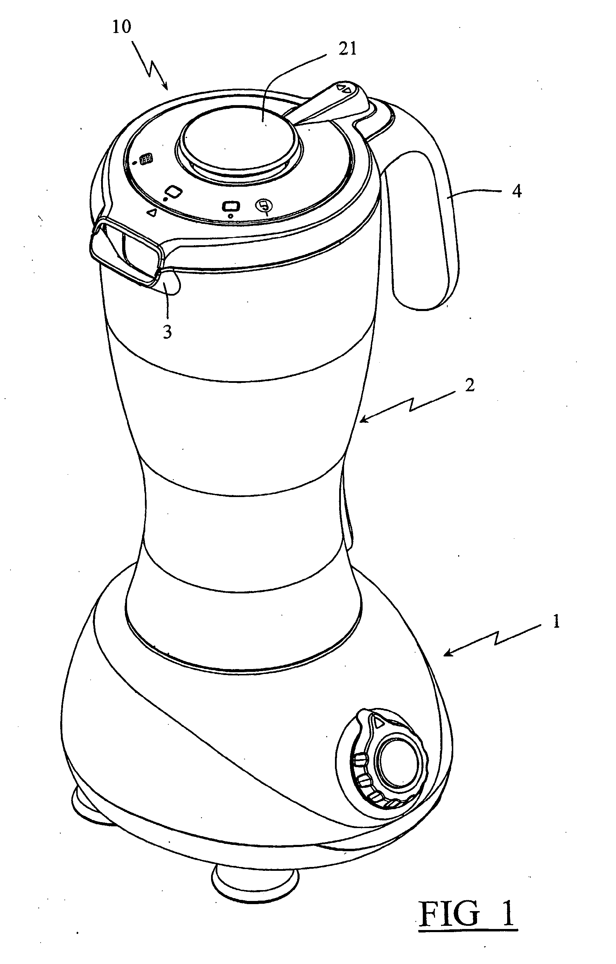

La figure 1 représente un appareil électroménager de préparation culinaire de type blender comportant un boîtier 1 servant de socle à un récipient 2 apte à contenir du liquide, le boîtier 1 comportant classiquement un moteur entraînant un outil de coupe rotatif, non représentés sur les figures, dans le fond du récipient 2.

Le récipient 2 est fermé par un couvercle 10 amovible et comporte un bord supérieur muni d'un bec verseur 3, le récipient 2 comportant une poignée 4 fixée à l'opposé du bec verseur 3.

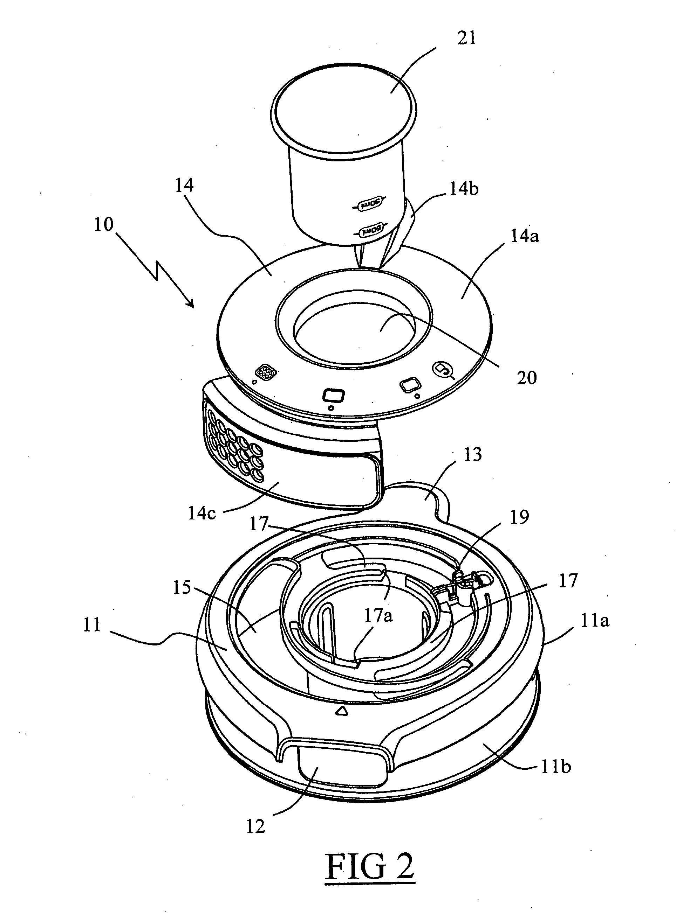

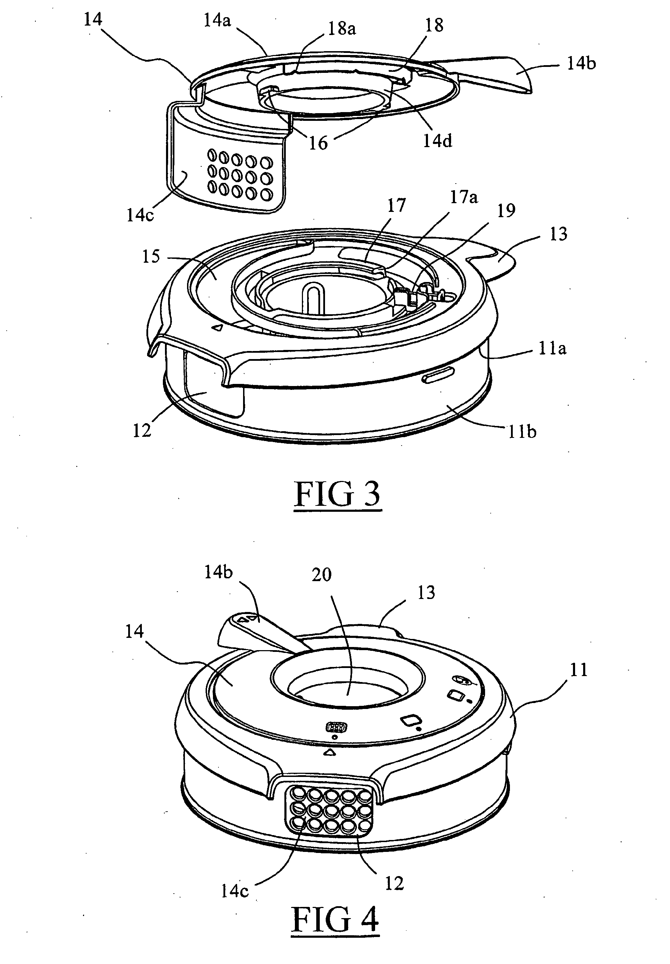

Le couvercle 10, représenté plus en détail sur les figures 2 et 3, comporte un corps 11 sensiblement cylindrique présentant un épaulement 11a sur sa périphérie extérieure destiné à venir reposer sur le bord supérieur du récipient 2.

Le corps 11 comporte également une jupe cylindrique 11 b s'étendant sous l'épaulement et venant s'insérer dans la partie supérieure du récipient 2 lorsque l'épaulement 11a repose sur le bord supérieur du récipient 2.

La jupe 11 b comporte un orifice latéral 12 venant se positionner en regard du bec verseur 3 lorsque le couvercle 10 est placé sur le récipient 2 et l'épaulement 11 a présente, au-dessus de cet orifice 12, une forme échancrée complémentaire de la forme du bec verseur 3.

Le corps 11 du couvercle 10 est muni, à l'opposé de cet orifice 12, d'une languette 13 venant prolonger la forme de la poignée 4, cette languette 13 comportant par exemple un ergot, non visible sur les figures, venant s'insérer dans la poignée 4 pour assurer le bon positionnement angulaire du corps 11 sur le récipient 2.

Le couvercle 10 comporte une ouverture centrale cylindrique 20 par laquelle des aliments peuvent être introduits dans le récipient 2 et qui peut être fermée par un bouchon 21 amovible, représenté uniquement sur les figures 1 et 2. De préférence, le bouchon 21 comporte un manchon cylindrique, s'insérant dans l'ouverture 20, qui constitue un verre doseur lorsque le bouchon 21 est retourné, ce manchon cylindrique étant avantageusement munie de graduations permettant de mesurer la quantité de liquide contenue dans le bouchon 21.

Plus particulièrement selon l'invention, le corps 11 supporte un élément 14 mobile en rotation comportant une partie annulaire 14a reposant sur la face supérieure du corps 11 et dont la face extérieure prolonge la face externe du corps 11 du couvercle 10. Cet élément mobile 14 peut être tourné manuellement au moyen d'une languette 14b s'étendant radialement à la surface externe de la partie annulaire 14a.

L'élément mobile 14 comporte un volet 14c d'obturation de l'orifice 12 s'insérant dans une fente 15 réalisée dans la partie supérieure du corps 11, le volet 14c s'étendant depuis le bord inférieur de la partie annulaire 14a et présentant une paroi venant prendre place à proximité immédiate de la périphérie intérieure de la jupe cylindrique 11 b du corps du couvercle, en épousant le rayon de courbure de cette dernière.

A titre d'exemple, la paroi du volet d'obturation 14c s'étend angulairement sur un angle de l'ordre de 80° et la fente 15 du corps du couvercle recevant le volet s'étend angulairement sur un angle de l'ordre de 180° de sorte que le volet 14c peut être tourné sur une plage angulaire de l'ordre 100°.

Conformément à la figure 3, l'élément mobile 14 comporte un manchon de guidage 14d qui s'étend vers le corps 11 du couvercle et comporte deux ergots 16, disposés symétriquement sur sa périphérie extérieure, qui viennent chacun s'insérer sous un rail de guidage 17 circulaire porté par le corps 10 du couvercle, ces rails de guidage 17 s'étendant angulairement sur environ 90° et présentant une extrémité 17a ouverte par laquelle l'ergot 16 peut être introduit sous le rail 17 ou dégagé de ce dernier.

L'élément mobile 14 comporte également une paroi 18 faisant saillie vers le corps 11 du couvercle et comprenant trois encoches 18a, ces encoches 18a coopérant avec une tige ressort 19 portée par le corps 10 du couvercle pour freiner l'élément mobile 14 dans des positions préétablies correspondant respectivement à la position d'ouverture, de fermeture et de filtrage de l'orifice 12.

A cet effet, la paroi du volet 14c présente une zone munie de multiples trous qui peut être amenée en regard de l'orifice 12 par rotation de l'élément mobile 14, ainsi que cela est représenté sur la figure 4, permettant ainsi d'obtenir une filtration du liquide traversant l'orifice 12.

La paroi du volet 14c comporte, à côté de cette zone trouée, une zone pleine qui peut être amenée en regard de l'orifice 12 du corps du couvercle pour masquer l'orifice 12 et empêcher tout écoulement de liquide par l'orifice 12, ainsi que cela est représenté à la figure 1.

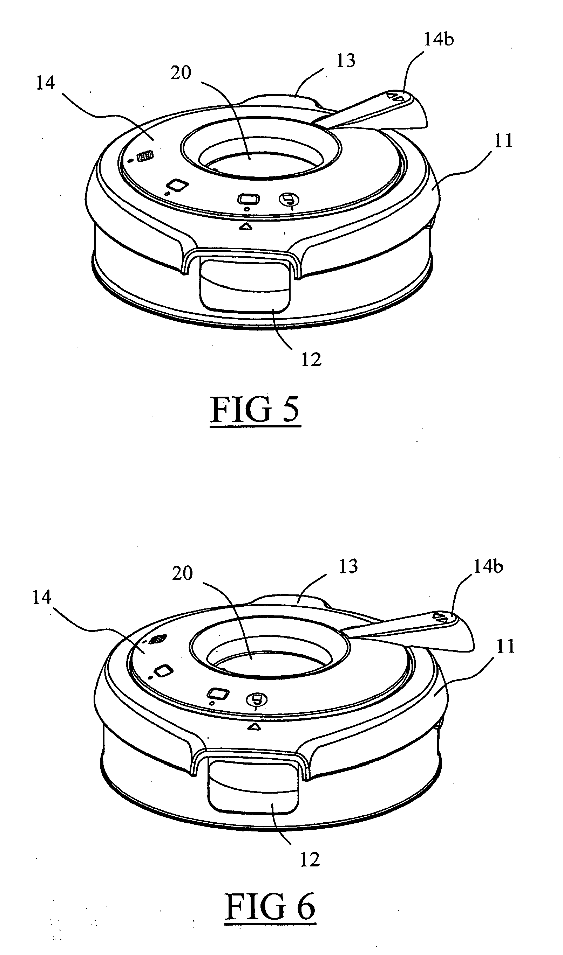

L'élément mobile 14 peut également être tourné de telle sorte que la paroi du volet 14c ne se trouve pas en regard de l'orifice 12, ainsi que cela est représenté sur la figure 5, afin de permettre un écoulement maximum par l'orifice 12.

Enfin, conformément à l'invention, l'élément mobile 14 du couvercle peut être amené dans une position de démontage, représentée à la figure 6, dans laquelle les deux ergots 16 sont désengagés des rails de guidage 17 par l'extrémité 17a ouverte. Dans une telle position, le démontage de la partie mobile 14 s'effectue simplement soulevant la languette 14b de manière à extraire le volet d'obturation 14c de l'ouverture 15 du corps 11 du couvercle, comme cela est représenté à la figure 3.

Une fois démontée, le corps 11 du couvercle et l'élément mobile 14 peuvent ainsi être facilement nettoyés. Le remontage du couvercle 10 s'effectue ensuite aisément en effectuant l'opération en sens inverse.

Le couvercle selon l'invention permet donc un démontage aisé de l'élément mobile d'obturation du corps du couvercle, ce qui présente l'avantage de permettre un nettoyage simple et complet de toutes les parties du couvercle. L'utilisation d'un tel couvercle est donc particulièrement avantageuse sur un appareil électroménager de type blender où le couvercle est couramment utilisé pour filtrer des mixtures contenant de la pulpe, cette dernière ayant tendance à se coincer dans tous les interstices.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la plage de rotation angulaire dans laquelle les ergots ne sont pas engagés sous les rails de guidage pourra être plus importante pour faciliter l'extraction et la mise en place de l'élément mobile d'obturation sur le corps du couvercle.

## Revendications

1. Couvercle de fermeture (10) d'un récipient (2) d'appareil électroménager de préparation culinaire de type blender apte à contenir du liquide, ledit couvercle (10) comportant un corps (11) muni d'un orifice (12) et un dispositif d'obturation de cet orifice (12), ledit dispositif d'obturation comprenant une partie mobile (14) entre plusieurs positions, dont l'une de fermeture empêche tout écoulement du liquide par l'orifice (12) et une autre d'ouverture autorise le versement du liquide par basculement du récipient (2), **caractérisé en ce que** la partie mobile (14) peut être disposée dans une position de démontage dans laquelle la partie mobile (14) se désolidarise du corps (11) du couvercle (10).

2. Couvercle de fermeture (10) selon la revendication 1, **caractérisé en ce que** la partie mobile (14) comporte également une position dans laquelle une paroi ajourée (14c) est disposée devant l'orifice (12) pour filtrer le liquide.

3. Couvercle de fermeture (10) selon l'une quelconque des revendications 1 à 2, **caractérisé en ce que** la partie mobile (14) est mobile en rotation et comporte une partie annulaire (14a) qui constitue une portion de la surface supérieure du couvercle (10), la partie annulaire (14a) supportant une languette de préhension (14b).

4. Couvercle de fermeture (10) selon l'une quelconque des revendications 1 à 3, **caractérisé en ce que** le corps (11) du couvercle (10) comporte au moins un rail de guidage (17) coopérant avec des ergots (16) portés par la partie mobile (14) du couvercle pour maintenir la partie mobile (14) sur le corps (11) du couvercle lorsque la partie mobile (14) n'est pas en position de démontage, ledit rail de guidage (17) s'interrompant sur une partie balayée par les ergots (16) lorsque la partie mobile (14) est en position de démontage afin d'autoriser le retrait de la partie mobile (14) dans cette position.

5. Couvercle de fermeture (10) selon les revendications 3 et 4, **caractérisé en ce que** l'orifice (12) est disposé latéralement sur le corps (11) du couvercle et **en ce que** la partie mobile (14) rotative comporte un volet (14c) s'insérant dans une fente réalisée dans la partie supérieure du corps (11) du couvercle et qui vient prendre place en regard dudit orifice (12) pour fermer ou réduire la section de passage de l'orifice (12).

6. Couvercle de fermeture (10) selon l'une quelconque des revendications 1 à 5, **caractérisé en ce qu'**il comporte un élément ressort (19) coopérant avec une paroi crantée (18) pour freiner la partie mobile (14) dans des positions préétablies.

7. Couvercle de fermeture (10) selon l'une quelconque des revendications 1 à 6, **caractérisé en ce que** la partie mobile (14) comporte une ouverture centrale (20) fermée par un bouchon (21).

8. Appareil électroménager de préparation culinaire de type blender comportant un boîtier (1) renfermant un moteur entraînant en rotation un outil de coupe, ledit outil de coupe étant disposé au fond d'un récipient (2) reposant sur le boîtier (1), **caractérisé en ce que** ledit récipient (2) comporte un couvercle (10) selon l'une quelconque des revendications 1 à 7.

## Claims

1. A closure lid (10) for closing a receptacle (2) of an electrical household appliance of the blender type for preparing food and suitable for containing liquid, the lid (10) comprising a body (11) provided with an orifice (12) and a closure device for closing said orifice (12), said closure device comprising a movable portion (14) that is movable between a plurality of positions, one of which is a closure position preventing any liquid from flowing through the orifice (12), and another of which is an open position allowing the liquid to be poured out by tilting the receptacle (2), the lid being **characterized in that** the movable portion (14) can be placed in a disassembly position in which the movable portion (14) can be separated from the body (11) of the lid (10).

2. A closure lid (10) according to claim 1, **characterized in that** the movable portion (14) also includes a position in which a perforated wall (14c) is disposed in front of the orifice (12) in order to filter the liquid.

3. A closure lid (10) according to claim 1 or claim 2, **characterized in that** the movable portion (14) is movable in rotation, and includes an annular portion (14a) that constitutes a portion of the top surface of the lid (10), the annular portion (14a) supporting a handle in the form of a tongue (14b).

4. A closure lid (10) according to any one of claims 1 to 3, **characterized in that** the body (11) of the lid (10) includes at least one guide rail (17) co-operating with studs (16) carried by the movable portion (14) of the lid in order to hold the movable portion (14) on the body (11) of the lid while the movable portion (14) is not in the disassembly position, said guide rail (17) being interrupted over a fraction that is swept by the studs (16) when the movable portion (14) is in the disassembly position, in order to allow the movable portion (14) to be withdrawn when in this position.

5. A closure lid (10) according to claims 3 and 4, **characterized in that** the orifice (12) is disposed on one side of the body (11) of the lid, and **in that** the portion (14) movable in rotation includes a flap (14c) that becomes inserted in a slot formed in the top portion of the body (11) of the lid, and takes up a position facing said orifice (12) in order to close or reduce the flow section of the orifice (12).

6. A closure lid (10) according to any one of claims 1 to 5, **characterized in that** it includes a spring element (19) co-operating with a notched wall (18) in order to brake the movable portion (14) in pre-established positions.

7. A closure lid (10) according to any one of claims 1 to 6, **characterized in that** the movable portion (14) includes a central opening (20) closed by a stopper (21).

8. An electrical household appliance of the blender type for preparing food, the appliance comprising a housing (1) containing a motor driving a cutter tool in rotation, said cutter tool being disposed in the bottom of a receptacle (2) standing on the housing (1), the appliance being **characterized in that** said receptacle (2) includes a lid (10) according to any one of claims 1 to 7.

## Patentansprüche

1. Deckel (10) zum Verschließen eines Behälters (2) eines Elektrohaushaltsgeräts zur Nahrungsmittelzubereitung vom Typ Mixer, der Flüssigkeit enthalten kann, wobei der Deckel (10) einen mit einer Öffnung (12) versehenen Körper (11) und eine Vorrichtung zum Schließen dieser Öffnung (12) aufweist, wobei die Schließvorrichtung ein zwischen mehreren Positionen bewegliches Teil (14) aufweist, wobei eine Schließposition jegliches Ausfließen der Flüssigkeit durch die Öffnung (12) verhindert und eine weitere, geöffnete Position das Ausgießen der Flüssigkeit durch Kippen des Behälters (2) ermöglicht, **dadurch gekennzeichnet, dass** das bewegliche Teil (14) in einer Ausbauposition angeordnet sein kann, in der sich das bewegliche Teil (14) von dem Körper (11) des Deckels (10) löst.

2. Verschlussdeckel (10) nach Anspruch 1, **dadurch gekennzeichnet, dass** das bewegliche Teil (14) auch einen Position aufweist, in der eine gelochte Wand (14c) vor der Öffnung (12) angeordnet ist, um die Flüssigkeit zu filtern.

3. Verschlussdeckel (10) nach Anspruch 1 oder 2, **dadurch gekennzeichnet, dass** das bewegliche Teil (14) drehbar ist und ein ringförmiges Teilstück (14a) aufweist, das einen Abschnitt der oberen Fläche des Deckels (10) bildet, wobei das ringförmige Teilstück (14a) eine Greiflasche (14b) trägt.

4. Verschlussdeckel (10) nach einem der Ansprüche 1 bis 3, **dadurch gekennzeichnet, dass** der Körper (11) des Deckels (10) mindestens eine Führungsschiene (17) aufweist, die mit von dem beweglichen Teil (14) des Deckels getragenen Nasen (16) so zusammenwirkt, dass das bewegliche Teil (14) am Körper (11) des Deckels gehalten ist, wenn sich das bewegliche Teil (14) nicht in der Ausbauposition befindet, wobei die Führungsschiene (17) an einem Teilstück unterbrochen ist, über das die Nasen (16) verlaufen, wenn sich das bewegliche Teil (14) in der Ausbauposition befindet, um in dieser Position das Entfernen des beweglichen Teils (14) zu ermöglichen.

5. Verschlussdeckel (10) nach den Ansprüchen 3 und 4, **dadurch gekennzeichnet, dass** die Öffnung (12) seitlich am Körper (11) des Deckels angeordnet ist und dass das drehbare bewegliche Teil (14) eine Klappe (14c) aufweist, die sich in eine im oberen Teil des Körpers (11) des Deckels ausgebildete Spalte einfügt und gegenüber der Öffnung (12) in Position gelangt, um den Durchlassquerschnitt der Öffnung (12) zu schließen oder zu verkleinern.

6. Verschlussdeckel (10) nach einem der Ansprüche 1 bis 5, **dadurch gekennzeichnet, dass** er ein Federelement (19) aufweist, das mit einer gerippten Wand (18) so zusammenwirkt, dass das bewegliche Teil (14) in vorbestimmten Positionen gebremst ist.

7. Verschlussdeckel (10) nach einem der Ansprüche 1 bis 6, **dadurch gekennzeichnet, dass** das bewegliche Teil (14) eine mittlere Öffnung (20) aufweist, die durch einen Stopfen (21) verschlossen ist.

8. Elektrohaushaltsgerät zur Nahrungsmittelzubereitung des Typs Mixer, mit einem Gehäuse (1), das einen Motor umschließt, der ein Schneidwerkzeug in Drehung versetzt, wobei das Schneidwerkzeug am Boden eines Behälters (2) angeordnet ist, der auf dem Gehäuse (1) angebracht ist, **dadurch gekennzeichnet, dass** der Behälter (2) einen Deckel (10) nach einem der Ansprüche 1 bis 7 aufweist.
